# EUROPEAN PATENT SPECIFICATION

(11) **EP 1 030 068 B1**
(45) Date of publication and mention of the grant of the patent: **16.10.2002**
(21) Application number: 00301304.2
(22) Date of filing: 18.02.2000
(51) Int. Cl.: F16B 13/12

(54) **Fastener**
Befestigungselement
Elément de fixation

(30) Priority: 19.02.1999 FR 9902058
(43) Date of publication of application: 23.08.2000
(73) Proprietor: YKK Europe Limited, London EC1V 8AN (GB)
(72) Inventor: Murata, Koji, 59130 Lambersart (FR)
(74) Representative: Luckhurst, Anthony Henry William

(56) References cited:
- EP-A- 0 663 534
- DE-C- 569 700
- US-A- 3 832 931
- US-A- 4 488 843

## Description

The present invention relates to a fastener. In particular the invention relates to fasteners for fastening articles to soft or compressible material such as a foam material.

Wall plugs for fastening articles to brick and masonry or plasterboard have been known for many years. For fastening to brick and masonry, a female plug is inserted in a hole in the wall and a screw is then driven into the plug. The screw head traps the item being mounted against the wall surface, and the shank of the screw spreads the plug inside the hole, to grip the wall of the hole. Typically the plug is serrated or has other formations to enhance the grip in the hole. For softer material such as plasterboard, an insert having an exaggerated thread on its outer surface is screwed into the board, and a screw is then driven into the insert. Another type of plasterboard fastening is driven completely through the board and a butterfly clip expands to bear on the far surface of the board as the fastening is screwed tight.

US-A-3 832 931 describes an arrangement in which an expansion plug or socket has axially extending legs with gripping formations on their outer surface. A plug is driven into the socket to spread the legs apart. The plug has teeth or notches on its outer surface which engage with cooperating formations on the inner surface of the legs, to hold the plug in place.

The present invention aims to provide a fastening which is particularly suited to attaching items, such as notice boards, to foam articles such as car seats.

The invention provides a fastener comprising a socket member having a head, a body extending from the head and split along its length to form body portions, gripping formations on the outer surface of the body portions, and a channel within the body, and a plug member having a shank extending from a head, the arrangement being such that when the shank of the plug member is pushed into the tapering channel of the socket member, the body portions are spread apart, characterised in that the channel has a substantially smooth bore and the shank has a substantially smooth outer surface, and engaging formations are provided on the heads of the socket member and the plug member to lock the plug member in place when it is pushed home in the socket member.

In use, the socket member is inserted into a hole or bore in the foam article and the plug member inserted to spread the body portions apart, causing them to grip the side wall of the bore.

The arrangement is particularly suited to a fastener for foam or other soft material because no twisting force is applied when the plug member is inserted into the socket member, and the body portions are continuously pushed outwards as the plug member is inserted.

The socket member might be incorporated in a foam article or the like at the time the article is manufactured.

Preferably the channel and the shank have a rectangular cross-section.

Preferably, a board or other article to be mounted is trapped between the head of the socket member and the foam article or other member on which the board is being mounted.

Other preferred features and advantages of the invention will be apparent from the following description and the accompanying drawings.

The invention will be further described by way of example, with reference to the accompanying drawings, in which
Figure 1 is a side view of a socket member of an embodiment of the invention;
Figure 2 is a plan view of the socket member of Figure 1,
Figure 3 is an underneath view of the socket member of Figure 1;
Figure 4 is a cross-section along the line IV-IV of Figure 2,
Figure 5 is a side view of a plug member of an embodiment of the invention, for use with the socket member of Figure 1;
Figure 6 is a diagonal cross-section of the plug member of Figure 5,
Figure 7 is a perspective view of a second embodiment of the invention,
Figure 8 is a cross-section along the line VIII-VIII of Figure 7, showing the second embodiment in use.

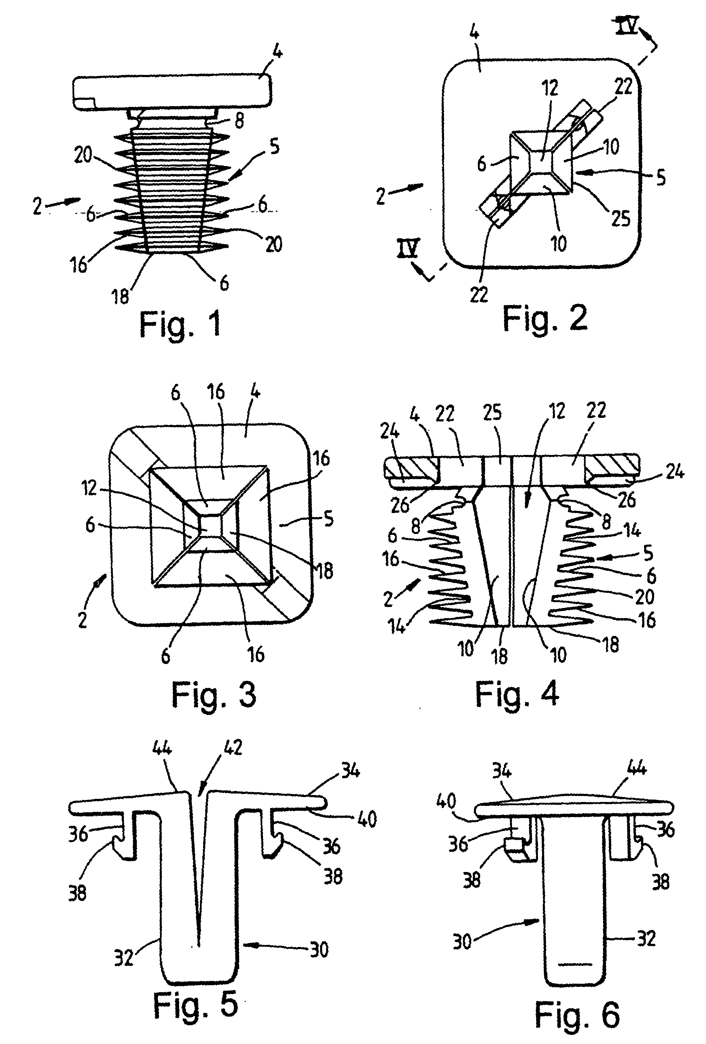

Referring to figures 1 to 4, a socket member 2 is integrally moulded of plastics material. The socket member 2 comprises a top plate or head 4 and a body 5 which is formed by four body portions or legs 6 which depend downwardly from the head 4 and are hinged at a hinge 8 in order to flex apart, as will be described hereinafter. In the relaxed position, the four legs 6 define between their inner flat surfaces 10 a square cross-section channel 12, the cross-section reducing in the direction away from the head 4.

The outer surface 14 of each leg 6 has gripping formations in the form of projecting ridges 16. The ridges 16 are higher, that is they extend further from the outer surface 14, towards the bottom end 18 of the legs 6. Thus, in the relaxed condition shown in figures 1 to 4, the outer profile defined by the tips 20 of the projections 16 is a square cross-section cylinder.

Referring to figure 2, two apertures 22 are formed in the head 4 at diagonally opposite corners of the mouth 25 of the channel 12. Diagonally outward of the apertures 22, the underside of the top plate 4 has a recess 24 (see Fig. 4), with a lip 26 at the junction between the recess 24 and the aperture 22.

Figures 5 and 6 show a plug member 30 which co-operates with the socket member 2 to form a fastener of the invention. The plug member 30 is integrally formed of plastics material and has a square cross-section shank 32. The shank 32 is dimensioned to slide easily through the mouth 25 of the channel 12, defined in the head 4, and to extend down to the bottom end 18 of the legs 6, as will be described hereinafter. The shank 32 depends from a cover plate or head 34 which is shaped to lay over and cover the socket head 4. Two prongs 36 having re-entrant nibs 38 depend downwardly from the underside 40 of the plug head 34, and are arranged on a diagonal of the plug head 34, which is generally square shaped similar to the socket head 4.

A tapering bore 42 extends into the shank 32 from the upper surface 44 of the plug head 34.

In use, a bore is formed in the foam material, plasterboard or other material which is to receive the socket member, and is dimensioned to receive the socket member in the relaxed state. The socket member is then pushed home, with the top plate resting on or near the outer surface of the foam etc. material. The plug member shank 32 is then pushed into the channel 12, which forces the legs 6 apart. The projections 16 will dig into or otherwise grip the wall of the bore, to fix the fastener in place. The prongs 36 pass through the apertures 22, the re-entrant nibs 38 riding over the lips 26, to lock the plug member 30 in place.

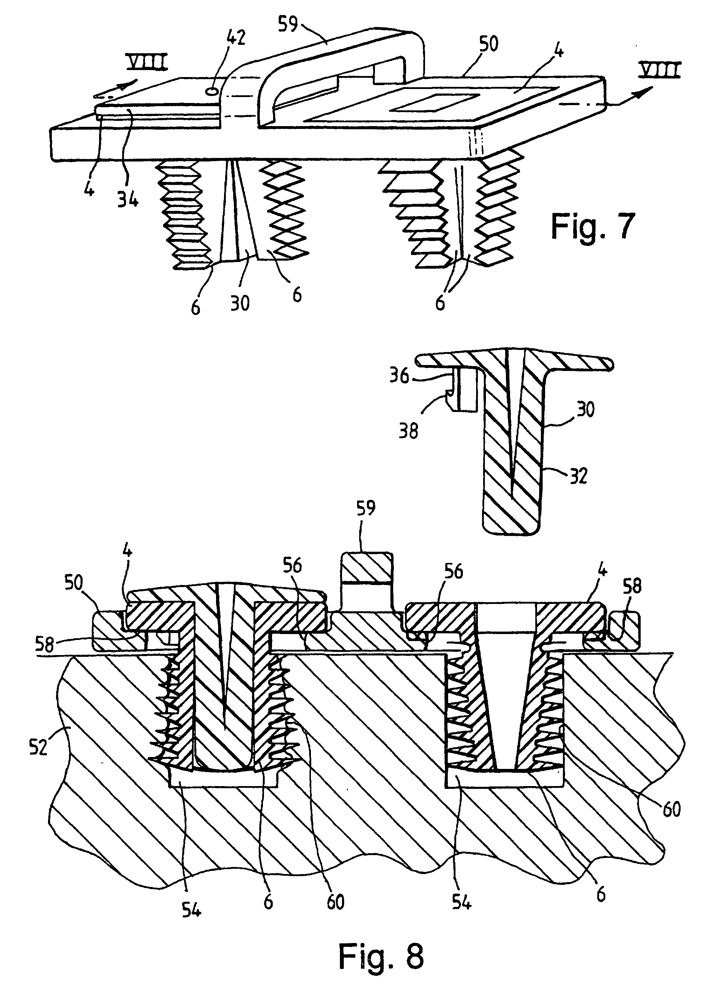

Figures 7 and 8 illustrate two fastener members of the invention, used to hold a fixing plate 50 in position. Figure 8 illustrates the fixing plate held against the surface of a foamed or other relatively soft material 52. A square cross-section blind bore 54 is formed in the foamed material 52, this can, for example, be formed when the material is cast, when manufacturing the foam product. The legs 6 of the socket 2 pass through an aperture 56 in the fixing plate 50, and the socket head 4 bears on a ledge 58 surrounding the aperture 56. The plug member 30 is then inserted into the socket member 2 to force the legs 6 apart and push the projections 16 into the wall 60 of the bore 54.

It will be appreciated that the projections 16 on the legs 6 may be shaped at their tips 20 so that the outer surface defined by the tips 20 of the projection 16 is generally a circular cylinder, so that the fastener can be conveniently inserted into a circular cross-section bore 54.

The fastener plate 50 includes a integrally formed staple 59 for attaching objects to the plate 50.

It will be appreciated that the plug member 30 may also be provided with a fitting for attachment of another item. Indeed, a screw could be inserted into the bore 42 if desired since the plug member 30 is coupled to the socket member 2.

Various modifications to the described embodiments will be apparent to those in the art, without departing from the scope of the invention, as defined by the appended claims.

## Claims

1. A fastener comprising a socket member (2) having a head (4), a body (5) extending from the head and split along its length to form body portions (6), gripping formations (16) on the outer surface (14) of the body portions, and a channel (12) within the body (5), and a plug member (30) having a shank (32) extending from a head (34), the arrangement being such that when the shank (32) of the plug member is pushed into the tapering channel (12) of the socket member, the body portions (6) are spread apart, **characterised in that** the channel (12) has a substantially smooth bore and the shank (32) has a substantially smooth outer surface, and engaging formations (36,22,38,26) are provided on the heads (4, 34) of the socket member (2) and the plug member (30) to lock the plug member (30) in place when it is pushed home in the socket member(2).

2. A fastener as claimed in claim 1, **characterised in that** the channel (12) has a rectangular cross-section.

3. A fastener as claimed in claim 1 or 2, **characterised in that** the shank (32) has a rectangular cross-section.

4. A fastener as claimed in any one of claims 1 to 3, **characterised in that** before the plug member (30) has been inserted in the socket member (2), outer edges (20) of the gripping formations (16) define a tube of constant cross-section.

5. A fastener as claimed in claim 4, wherein the cross-section is a square cross-section.

6. A fastener as claimed in any one of claims 1 to 5, wherein four body portions (6) are provided.

## Patentansprüche

1. Befestigungselement, welches beinhaltet: Ein Buchsenelement (2), das einen Kopf (4), einen Körper (5), der sich ausgehend vom Kopf erstreckt und zur Bildung von Körperteilstücken (6) über seine Länge geteilt ist, Greifstrukturen (16), die sich auf der Außenfläche (14) der Körperteilstücke befinden, und einen Kanal, der sich innerhalb des Körpers (5) befindet, aufweist; und ein Stopfenelement (30), das einen Schaft (32) aufweist, der sich von einem Kopf (34) weg erstreckt, wobei die Anordnung derart ist, dass, wenn der Schaft (32) des Stopfenelementes in den sich verjüngenden Kanal (12) des Buchsenelementes eingedrückt wird, die Körperteilstücke (6) aufgespreizt werden, **dadurch gekennzeichnet, dass** der Kanal (12) eine im Wesentlichen glatte Bohrung aufweist und der Schaft (32) eine im Wesentlichen glatte Außenfläche aufweist, und Eingreifstrukturen (36, 22, 38, 26) auf den Köpfen (4, 34) des Buchsenelementes (2) und des Stopfenelementes (30) vorgesehen sind, um das Stopfenelement (30), wenn es ganz in das Buchsenelement (2) hinein gedrückt wurde, an der Stelle zu verriegeln.

2. Befestigungselement nach Anspruch 1, **dadurch gekennzeichnet, dass** der Kanal (12) einen rechteckigen Querschnitt hat.

3. Befestigungselement nach Anspruch 1 oder 2, **dadurch gekennzeichnet, dass** der Schaft (32) einen rechteckigen Querschnitt hat.

4. Befestigungselement nach einem der Ansprüche 1 bis 3, **dadurch gekennzeichnet, dass**, bevor das Stopfenelement (30) in das Buchsenelement (2) eingesetzt ist, die Außenkanten (20) der Greifstrukturen (16) eine Röhre konstanten Querschnitts begrenzen.

5. Befestigungselement nach Anspruch 4, bei welchem der Querschnitt quadratisch ist.

6. Befestigungselement nach einem der Ansprüche 1 bis 5, bei welchem vier Körperteilstücke (6) vorgesehen sind.

## Revendications

1. Elément de fixation comprenant un élément femelle (2) avec une tête (4), un corps (5) qui s'étend à partir de la tête et est fendu longitudinalement de manière à former des parties de corps (6), des reliefs d'accrochage (16) sur la surface extérieure (14) des parties de corps, un passage (12) à l'intérieur du corps (5), et un élément formant cheville (30) avec une tige (32) qui s'étend à partir d'une tête (34), l'agencement étant tel que quand la tige (32) de l'élément formant cheville est poussée dans le passage conique (12) de l'élément femelle, les parties de corps (6) sont écartées, **caractérisé en ce que** le passage (12) comporte un trou sensiblement lisse, **en ce que** la tige (32) a une surface extérieure sensiblement lisse et **en ce que** des reliefs d'encliquetage (36, 22, 38, 26) sont ménagés sur les têtes (4, 34) de l'élément femelle (2) et de l'élément formant cheville (30), afin de verrouiller en place l'élément formant cheville (30) lorsqu'il est poussé à fond dans l'élément femelle (2).

2. Elément de fixation selon la revendication 1, **caractérisé en ce que** le passage (12) a une section rectangulaire.

3. Elément de fixation selon la revendication 1 ou 2, **caractérisé en ce que** la tige (32) a une section rectangulaire.

4. Elément de fixation selon l'une quelconque des revendications 1 à 3, **caractérisé en ce qu'**avant l'introduction de l'élément formant cheville (30) dans l'élément femelle (2), des bords extérieurs (20) des reliefs d'accrochage (16) définissent un tube de section constante.

5. Elément de fixation selon la revendication 4, dans lequel la section est une section carrée.

6. Elément de fixation selon l'une quelconque des revendications 1 à 5, dans lequel sont ménagées quatre parties de corps (6).
